Europäisches Patentamt

European Patent Office

Office européen des brevets

(19)

(11) Numéro de publication : **0 028 545**
**B1**

(12) **FASCICULE DE BREVET EUROPÉEN**

(45) Date de publication du fascicule du brevet :
**24.11.82**

(51) Int. Cl.³ : **B 01 D 53/18,** F 28 F 25/08,
C 02 F   3/10, B 01 J 10/00

(21) Numéro de dépôt : **80401316.7**

(22) Date de dépôt : **16.09.80**

(54) **Feuille de ruissellement pour dispositif de garnissage d'installation de mise en contact de liquide et de gaz.**

(30) Priorité : 26.10.79 FR 7926636

(43) Date de publication de la demande :
**13.05.81 (Bulletin 81/19)**

(45) Mention de la délivrance du brevet :
**24.11.82 Bulletin 82/47**

(84) Etats contractants désignés :
**AT BE CH DE GB IT LI LU NL SE**

(56) Documents cités :
DE A 1 519 550
FR A 2 263 808
GB A 792 740
LU A 55 593
US A 3 281 307

(73) Titulaire : **HAMON-SOBELCO S.A. Société dite:**
**50-58, Rue Capouillet**
**B-1060 Bruxelles (BE)**

(72) Inventeur : **Monjole, Michel W. J. P. R.**
**33, Rue Frans Merjay**
**B-1060 Bruxelles (BE)**

(74) Mandataire : **Moncheny, Michel et al**
**c/o Cabinet Lavoix 2 Place d'Estienne d'Orves**
**F-75441 Paris Cedex 09 (FR)**

Jouve, 18, rue St-Denis, 75001 Paris, France

**Feuille de ruissellement pour dispositif de garnissage d'installation de mise en contact de liquide et de gaz**

La présente invention concerne les installations de mise en contact d'un liquide avec un gaz et se rapporte plus particulièrement à un dispositif de garnissage pour une telle installation ainsi qu'aux feuilles dont est constitué un tel dispositif de garnissage.

Les installations de mise en contact d'un liquide avec un gaz comportent généralement une chambre ou cheminée dans laquelle est installé le dispositif de garnissage. Suivant une technique connue, ce dernier est constitué d'une série de feuilles juxtaposées sur lesquelles est pulvérisé le liquide, par exemple de l'eau, qui ruisselle le long des feuilles à contre-courant par rapport au gaz, par exemple de l'air. Ces installations peuvent servir au refroidissement d'eau, de solutions aqueuses, salines, acides ou autres par l'air atmosphérique.

Le certificat d'addition français n° 74 08224 décrit une feuille de ruissellement à ondulations verticales présentant, le long des arêtes verticales des ondulations, des zones déformées formant sur l'une au moins des faces de la feuille des saillies ou rampes s'étendant à partir de l'arête d'une ondulation de manière à provoquer une déviation de liquide, cette feuille comportant successivement, dans une direction parallèle à ses arêtes, au moins deux zones dans lesquelles l'amplitude des ondulations est différente, ces deux zones étant réunies entre elles par des parties déformées de la feuille constituant des rampes provoquant la déviation des filets liquides.

L'invention vise à réaliser une feuille de ruissellement pour dispositif de garnissage qui reprenne et accroisse les avantages des dispositifs analogues, en particulier ceux constitués à partir des feuilles conformes au certificat d'addition français n° 74 08224 précité, c'est-à-dire notamment un faible poids, une grande facilité de montage, un entretien réduit ou nul, une grande résistance à la corrosion et à la glace, et qui en outre offre un meilleur échange thermique pour un même volume de matériau utilisé et une réduction de la hauteur de ruissellement nécessaire à un échange donné, ce qui provoque une diminution de la hauteur de pompage nécessaire pour amener le liquide au-dessus du dispositif de garnissage.

A cet effet, l'invention a pour objet une feuille de ruissellement ondulée pour dispositif de garnissage constitué de feuilles de ruissellement de liquide, juxtaposées et ondulées verticalement, ménageant entre elles des passages pour un gaz, ladite feuille comprenant successivement, dans une direction parallèle aux crêtes des ondulations, au moins deux zones, à savoir une zone à ondulations de première amplitude et une zone à ondulations de plus faible amplitude ou, à la limite, d'amplitude nulle, qui sont réunies entre elles par une zone de transition, caractérisée en ce que ladite feuille présente de distance en distance le long des crêtes de ses ondulations des dispositifs d'entretoisement portés par les zones de première amplitude et par les zones de plus faible amplitude ou d'amplitude nulle et en ce que les dispositifs d'entretoisement portés par les zones de première amplitude sont complémentaires des dispositifs d'entretoisement portés par les zones de plus faible amplitude ou d'amplitude nulle, chaque dispositif d'entretoisement porté par une zone de première amplitude étant apte à coopérer avec un dispositif d'entretoisement complémentaire porté par une zone de plus faible amplitude ou d'amplitude nulle pour la fixation d'une feuille à une feuille adjacente identique.

Suivant un mode de réalisation préféré de l'invention, les ondulations de première amplitude ont un profil curviligne et les ondulations de plus faible amplitude ont un profil anguleux.

Suivant un autre mode de réalisation, les ondulations de première amplitude ont un profil anguleux et l'amplitude des ondulations de plus faible amplitude est nulle.

Suivant une caractéristique de l'invention, la feuille présente des gaufrages sur ses deux faces opposées.

Suivant une autre caractéristique de l'invention, lesdits dispositifs d'entretoisement comprennent des bossages en saillie ménagés du côté de la concavité des ondulations de plus faible amplitude et des méplats ménagés du côté de la convexité des ondulations de première amplitude.

Suivant une autre caractéristique de l'invention, lesdites zones à ondulations de plus faible amplitude et à ondulations de première amplitude ont les mêmes longueurs considérées dans une direction parallèle aux crêtes des ondulations.

L'invention a également pour objet un dispositif de garnissage pour installation de mise en contact d'un liquide avec un gaz constitué d'une série de feuilles telles que définies ci-dessus qui sont juxtaposées et fixées les unes aux autres, les ondulations de première amplitude et de plus faible amplitude de chaque feuille ayant le même pas et étant en phase.

Suivant une caractéristique de l'invention, les feuilles de ce dispositif sont agencées de telle sorte que les méplats et les bossages d'une feuille sont fixés respectivement aux bossages et aux méplats de la ou chaque feuille adjacente.

Suivant encore une autre caractéristique de l'invention, ledit dispositif de garnissage est constitué de feuilles identiques symétriques par rapport à un plan médian parallèle à la direction des crêtes des ondulations, les feuilles étant disposées alternativement dans un sens et dans le sens inverse obtenu par rotation de la feuille de 180° autour d'un axe contenu dans ledit plan médian, passant par le milieu de la longueur de la feuille et perpendiculaire à celle-ci.

D'autres caractéristiques et avantages de l'invention ressortiront de la description qui va suivre, faite en se référant aux dessins annexés donnés uniquement à titre d'exemple et sur lesquels :

la Figure 1 est une vue légèrement en perspective d'une feuille de ruissellement suivant un mode préféré de réalisation de l'invention ;

la Figure 2 est une vue en coupe suivant la ligne 2-2 de la Fig. 1 ;

la Figure 3 est une vue en coupe suivant la ligne 3-3 de la Fig. 1 ;

la Figure 4 est une vue en plan à plus grande échelle d'une partie de la zone à ondulations curvilignes de la feuille de la Fig. 1, celle-ci étant supposée développée ;

la Figure 5 est une vue en coupe suivant la ligne 5-5 de la Fig. 4 montrant le profil des ondulations curvilignes de la feuille de la Fig. 1 ;

la Figure 6 est une vue analogue à la Fig. 5 mais à plus grande échelle, prise suivant la ligne 6-6 de la Fig. 4 ;

la Figure 7 est une vue analogue à la Fig. 4 montrant les gaufrages formés dans la feuille de la Fig. 1 dans la zone à ondulations anguleuses, la feuille étant supposée développée ;

la Figure 8 est une vue en coupe suivant la ligne 8-8 de la Fig. 7 montrant le profil des ondulations anguleuses ; et

la Figure 9 est une vue de détail en perspective montrant la fixation des feuilles entre elles au moyen de leurs dispositifs d'entretoisement.

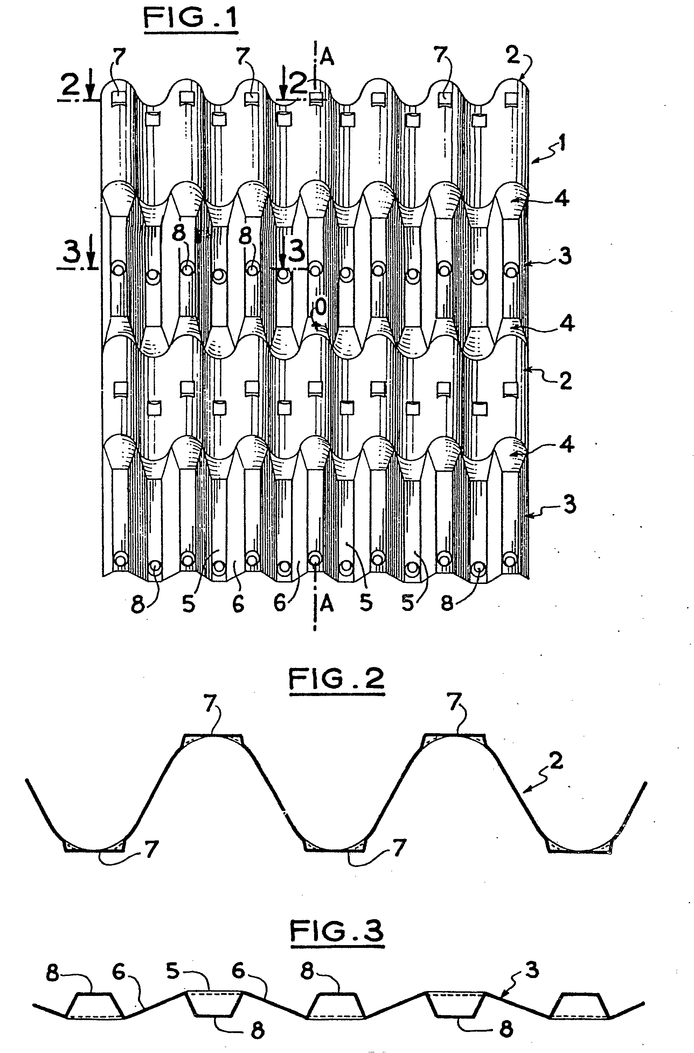

En se reportant à la Fig. 1, on voit une feuille de ruissellement ondulée 1 constituée alternativement de zones 2 dans lesquelles les ondulations ont un profil curviligne et de zones 3 dans lesquelles les ondulations ont un profil anguleux. Les zones 2 et 3 sont réunies par des zones intermédiaires 4 qui assurent la transition progressive et continue d'une zone 2 à profil curviligne à une zone 3 à profil anguleux et vice versa. De préférence, les zones 2 et 3 ont des longueurs identiques considérées suivant une direction parallèle aux crêtes des ondulations et la feuille 1 est symétrique par rapport à un plan médian A-A orthogonal au plan d'ensemble de la feuille 1 et s'étendant également parallèlement aux crêtes des ondulations. Cette symétrie permet, comme on le verra par la suite, d'utiliser un seul type de feuille pour constituer un dispositif de garnissage, les feuilles étant alternativement disposées dans un sens et dans l'autre dans le dispositif de garnissage. La feuille 1 peut comporter une seule paire de zones 2 et 3, deux paires de ces zones comme représenté à la Fig. 1 ou plusieurs paires si nécessaire, la longueur précitée de chacune de ces zones étant par exemple de 12 cm.

Comme représenté aux Fig. 2 et 3, les ondulations curvilignes et anguleuses des zones 2 et 3 respectivement ont le même pas et sont en phase, mais l'amplitude crête à crête des ondulations curvilignes est supérieure à l'amplitude crête à crête des ondulations anguleuses. Comme représenté, les crêtes des ondulations anguleuses 3 sont constituées par des surfaces planes 5 réunies entre elles par des surfaces également planes 6 de sorte que chaque ondulation présente la forme d'un trapèze dont la grande base serait constituée par une ligne imaginaire joignant les crêtes planes des deux ondulations encadrant l'ondulation considérée. De leur côté, les ondulations curvilignes 2 présentent un profil de forme approximativement sinusoïdale, mais il doit être compris que l'invention n'est pas limitée à la forme des ondulations curvilignes et anguleuses décrite et représentée et que tout autre profil similaire pourrait être adopté. En particulier, on pourrait prévoir des ondulations anguleuses à arêtes vives au lieu des crêtes planes 5 précitées.

La feuille 1 présente de distance en distance le long des crêtes de ses ondulations des dispositifs d'entretoisement constitués de méplats 7 et de bossages 8 au moyen desquels cette feuille peut être fixée localement à une feuille identique et maintenue hors de contact avec celle-ci hormis au niveau des dispositifs d'entretoisement comme cela sera expliqué par la suite. Ainsi que cela apparaît sur les Fig. 2 et 3, les méplats 7 sont ménagés du côté de la convexité des ondulations curvilignes 2 tandis que les bossages 8 sont formés du côté de la concavité des ondulations anguleuses 3. Afin de permettre le montage de plusieurs feuilles 1 alternativement dans un sens et dans l'autre dans un dispositif de garnissage, les bossages et les méplats sont placés le long des crêtes des ondulations de manière qu'un méplat d'une feuille coïncide avec un bossage d'une feuille adjacente retournée et vice versa. Les bossages 8 peuvent avoir la forme d'un tronc de cône comme représenté ou toute autre forme appropriée, telle qu'un tronc de pyramide, et leur petite base présente une surface réduite du même ordre de grandeur, mais de préférence plus petite que celle des méplats pour tenir compte des tolérances de fabrication et d'assemblage, afin de réduire au minimum la surface de contact entre deux feuilles adjacentes. Par exemple, le méplat a une aire de 1 cm$^2$ et la petite base du bossage a une aire de 0,25 cm$^2$. On notera que dans l'exemple représenté à la Fig. 2 la surface plane de chaque méplat est disposée dans un plan tangent aux ondulations curvilignes 2 de la feuille 1, mais, en variante, cette surface peut être décalée d'un côté ou de l'autre par rapport à ce plan tangent.

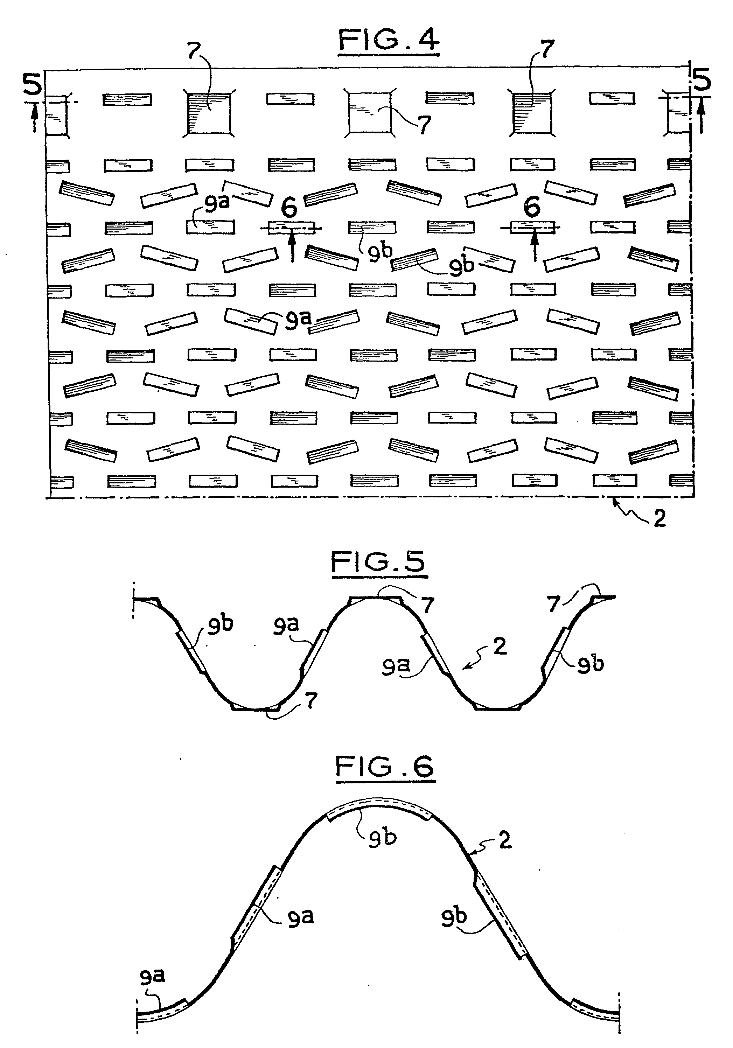

En se reportant maintenant aux Fig. 4 à 6, on voit que la feuille 1 présente des gaufrages sur ses faces opposées. Les reliefs 9$^a$ et 9$^b$ de ces gaufrages sont agencés suivant des rangées parallèles orthogonales à la direction des arêtes des ondulations, les reliefs 9$^a$ dépourvus de hachures correspondant à des parties en saillie vers l'observateur en considérant la Fig. 4, tandis que les reliefs 9$^b$ hachurés correspondent à des parties en creux en considérant la Fig. 4, c'est-à-dire en saillie de l'autre côté de la feuille 1 par rapport aux reliefs 9$^a$. Les reliefs 9$^a$ et 9$^b$ présentent une forme rectangulaire et les rangées successives de reliefs comprennent alternativement des rangées dans lesquelles les reliefs ont leur plus grande dimension orientée suivant la direction de la rangée dont ils font partie et des rangées dans lesquelles les reliefs ont leur plus grande dimension orientée obliquement par rapport à la direction de la rangée dont ils font partie.

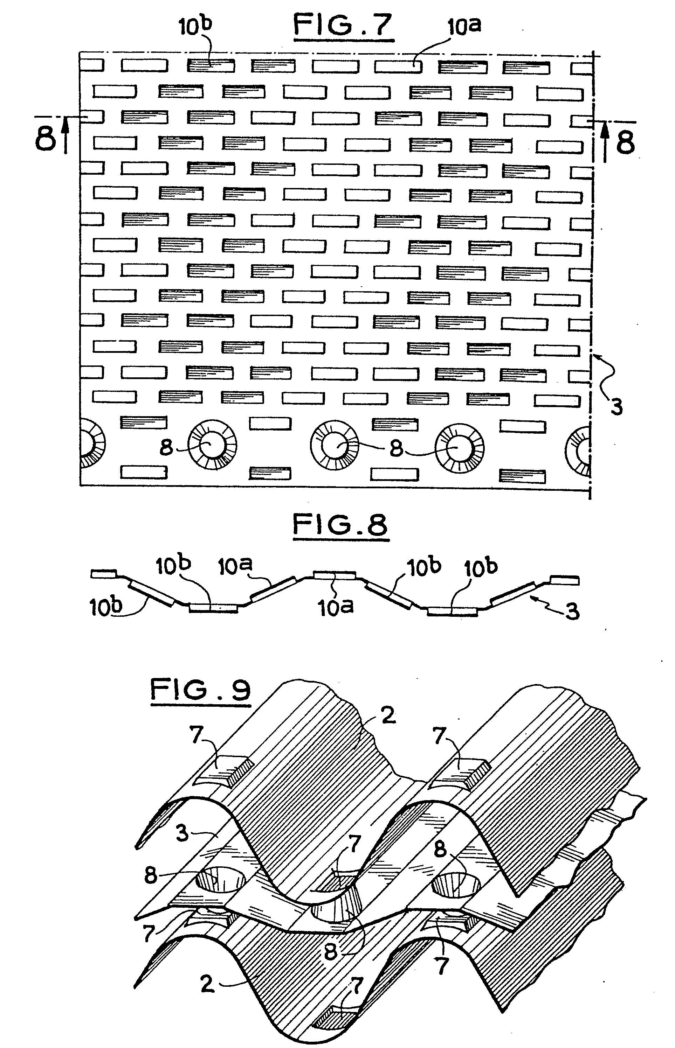

Les zones 3 à ondulations anguleuses (Fig. 7 et 8) présentent également des gaufrages dont les reliefs $10^a$ et $10^b$ sont identiques aux reliefs $9^a$ et $9^b$ à ceci près qu'ils ont tous leur plus grande dimension orientée suivant la direction de la rangée dont ils font partie.

Aussi bien dans les zones 2 à ondulations curvilignes que dans les zones 3 à ondulations anguleuses, chaque rangée comporte alternativement une paire de reliefs $9^a$, $10^a$ en saillie d'un côté de la feuille et une paire de reliefs $9^b$, $10^b$ en saillie de l'autre côté de la feuille. Enfin, de préférence, les zones de transition 4 ne comportent pas de gaufrage.

Dans les zones 2 à ondulations curvilignes et les zones 3 à ondulations anguleuses, les gaufrages forment de chaque côté de la feuille une succession de bosses et de creux qui ont comme avantages de casser les pellicules d'eau qui ruissellent de part et d'autre de la feuille, de rigidifier celle-ci, et de contraindre l'eau à suivre un mouvement en zigzag qui freine sa chute et accroît par conséquent la durée pendant laquelle cette eau est en contact d'échange thermique avec le gaz qui, en fonctionnement, traverse le dispositif de garnissage constitué par de telles feuilles.

Comme le montre la Fig. 9, dans un tel dispositif de garnissage les feuilles 1 adjacentes sont disposées en sens inverse l'une de l'autre de sorte qu'une zone 2 à ondulations curvilignes est toujours comprise entre deux zones 3 à ondulations anguleuses et que, de même, une zone 3 à ondulations anguleuses est comprise entre deux zones 2 à ondulations curvilignes, sauf bien entendu en ce qui concerne les feuilles d'extrémité du dispositif de garnissage. Comme indiqué précédemment, cet agencement est rendu possible par le fait que chaque feuille 1 présente un plan longitudinal médian de symétrie A-A et que les zones 2 et 3 ont des longueurs identiques de sorte que, par rotation d'une feuille autour d'un axe 0 (Fig. 1) contenu dans le plan médian précité et passant par le milieu de la longueur de la feuille, celle-ci peut être appliquée contre une feuille identique non retournée dans une position telle que les méplats 7 de l'une des feuilles se trouvent en coïncidence avec les bossages ou tétons 8 de l'autre feuille et vice versa. Par conséquent, les feuilles adjacentes n'ont de contact qu'au niveau des dispositifs d'entretoisement 7, 8, ce qui présente le gros avantage d'éviter tout contact continu des feuilles entre elles comme c'était le cas dans les dispositifs de garnissage de la technique antérieure. En effet, le contact continu entre deux feuilles adjacentes forme un coin dans lequel le liquide qui ruisselle sur les feuilles se concentre, ce qui nuit à son bon échange avec le gaz. A contrario, le fait d'éviter le contact continu entre les feuilles adjacentes empêche une telle formation de ces concentrations de liquide. En outre, la disposition suivant l'invention a l'avantage de permettre le passage du liquide d'un chenal délimité par une ondulation d'une zone 2 d'une feuille et une ondulation d'une zone 3 de la feuille adjacente au chenal suivant, ce qui assure une meilleure répartition du liquide le long des feuilles.

L'assemblage des feuilles entre elles au niveau des méplats 7 et des bossages 8 peut être effectué soit par soudure, soit par collage, soit encore par emboîtement de tétons mâles et femelles prévus sur les méplats 7 et les bossages 8.

A titre d'exemple, une feuille 1 peut présenter une hauteur d'environ 0,25 m à plus de 2 m et comporter des zones 2 et 3 d'une longueur de 12 cm comme indiqué précédemment, avec une amplitude crête à crête des ondulations pouvant être comprise entre 12 et 60 mm pour la zone 2 et entre 0 et 40 mm pour la zone 3. D'autre part, la hauteur des bossages 8 peut être de l'ordre de 3 à 10 mm et la profondeur des reliefs des gaufrages de l'ordre de 1 mm. Les méplats, les bossages et les gaufrages sont de préférence venus de matière avec la feuille, laquelle peut être fabriquée en matière plastique, par exemple par thermoformage sous vide ou thermoformage par emboutissage, ou en métal par emboutissage.

En variante, les ondulations anguleuses peuvent avoir une plus grande amplitude que celle des ondulations curvilignes, cette dernière pouvant à la limite être nulle, formant ainsi une zone plane.

Suivant une autre variante, les gaufrages peuvent être remplacés en totalité ou en partie par un réseau de trous de forme circulaire, oblongue ou autre ayant des dimensions du même ordre de grandeur que celles des reliefs des gaufrages.

Bien entendu, l'invention n'est pas limitée à la forme de réalisation décrite et l'on peut, sans sortir de son cadre, y apporter de nombreuses modifications en ce qui concerne la forme, les dimensions et la position des reliefs des gaufrages qui peuvent être quelconques.

**Revendications**

1. Feuille de ruissellement ondulée pour dispositif de garnissage constitué de feuilles de ruissellement de liquide, juxtaposées et ondulées verticalement, ménageant entre elles des passages pour un gaz, ladite feuille comprenant successivement, dans une direction parallèle aux crêtes des ondulations, au moins deux zones, à savoir une zone à ondulations de première amplitude (2) et une zone à ondulations de plus faible amplitude (3) ou, à la limite, d'amplitude nulle, qui sont réunies entre elles par une zone de transition (4), caractérisée en ce que ladite feuille (1) présente de distance en distance le long des crêtes de ses ondulations des dispositifs d'entretoisement (7, 8) portés par les zones de première amplitude et par les zones de plus faible amplitude ou d'amplitude nulle et en ce que les dispositifs d'entretoisement (7) portés par les zones de première amplitude (2) sont complémentaires des dispositifs d'entretoisement (8) portés par les zones de plus faible amplitude (3) ou d'amplitude nulle, chaque dispositif d'entretoisement (7) porté par une zone de première amplitude (2) étant apte à coopérer avec un dispositif d'entretoisement complémentaire (8) porté par une zone de plus faible amplitude (3) ou d'amplitude nulle pour la fixation d'une feuille à une feuille adjacente identique.

2. Feuille suivant la revendication 1, caractérisée en ce que les ondulations de première amplitude ont un profil curviligne, et les ondulations de plus faible amplitude ont un profil anguleux.

3. Feuille suivant la revendication 1, caractérisée en ce que les ondulations de première amplitude ont un profil anguleux et en ce que l'amplitude des ondulations de plus faible amplitude est nulle.

4. Feuille suivant l'une quelconque des revendications 1 à 3, caractérisée en ce qu'elle comprend plusieurs zones à ondulations de première amplitude (2) alternant avec un nombre égal de zones à ondulations de plus faible amplitude (3).

5. Feuille suivant l'une quelconque des revendications 1 à 4, caractérisée en ce que lesdits dispositifs d'entretoisement comprennent des bossages en saillie (8) ménagés du côté de la concavité desdites ondulations de plus faible amplitude (3) et des méplats (7) ménagés du côté de la convexité desdites ondulations de première amplitude (2).

6. Feuille suivant la revendication 5, caractérisée en ce que la crête desdites ondulations de plus faible amplitude (3) est constituée par une surface plane (5) portant lesdits bossages (8).

7. Feuille suivant l'une quelconque des revendications 5 et 6, caractérisée en ce que lesdits bossages (8) et lesdits méplats (7) sont venus de matière avec ladite feuille (1).

8. Feuille suivant l'une quelconque des revendications 1 à 7, caractérisée en ce qu'elle présente des gaufrages sur ses deux faces opposées.

9. Feuille suivant la revendication 8, caractérisée en ce que les reliefs (9a, 9b, 10a, 10b) desdits gaufrages sont agencés suivant des rangées parallèles orthogonales à la direction des crêtes des ondulations.

10. Feuille suivant la revendication 9, caractérisée en ce que les reliefs présentent une forme allongée, les reliefs (10a, 10b) de chaque rangée de la zone à ondulations de plus faible amplitude (3) ayant leur plus grande dimension orientée suivant la direction de ladite rangée tandis que ladite zone à ondulations de première amplitude (2) présente alternativement des rangées dans lesquelles les reliefs (9a, 9b) ont leur plus grande dimension orientée suivant la direction de la rangée dont ils font partie et des rangées dans lesquelles les reliefs (9a, 9b) ont leur plus grande dimension orientée obliquement par rapport à la direction de la rangée dont ils font partie.

11. Feuille suivant l'une quelconque des revendications 1 à 10, caractérisée en ce qu'elle comporte un réseau de trous de forme circulaire, oblongue ou autre.

12. Feuille suivant l'une quelconque des revendications 1 à 11, caractérisée en ce que lesdites zones à ondulations de plus faible amplitude (3) et à ondulations de première amplitude (2) ont les mêmes longueurs considérées dans une direction parallèle aux crêtes des ondulations.

13. Dispositif de garnissage pour installation de mise en contact d'un liquide avec un gaz, caractérisé en ce qu'il est constitué d'une série de feuilles (1) suivant l'une quelconque des revendications 1 à 12, juxtaposées et fixées les unes aux autres, les ondulations de première amplitude et de plus faible amplitude de chaque feuille ayant le même pas et étant en phase.

14. Dispositif suivant la revendication 13 et constitué d'une série de feuilles (1) suivant la revendication 5, caractérisé en ce que les méplats (7) et les bossages (8) d'une feuille (1) sont fixés respectivement aux bossages (8) et aux méplats (7) de la ou chaque feuille adjacente (1).

15. Dispositif suivant la revendication 14 et constitué d'une série de feuilles (1) suivant la revendication 4, caractérisé en ce qu'il est constitué de feuilles (1) identiques symétriques par rapport à un plan médian parallèle à la direction des crêtes des ondulations, lesdites feuilles (1) étant disposées alternativement dans un sens et dans le sens inverse obtenu par rotation de la feuille de 180° autour d'un axe contenu dans ledit plan médian, passant par le milieu de la longueur de la feuille et perpendiculaire à celle-ci.

**Claims**

1. A corrugated streaming sheet for a furnishing device constituted by liquid streaming sheets which are juxtaposed and vertically corrugated and form therebetween passages for a gas, said sheet comprising in succession, in a direction parallel to the crests of the corrugations ; at least two regions, namely a region having corrugations of a first amplitude (2) and a region having corrugations of a smaller amplitude (3) or, in the extreme case, zero amplitude, which are interconnected by a transition region (4), characterised in that said sheet (1) has at intervals along the crests of its corrugations spacer devices (7, 8) carried by the regions of first amplitude and by the regions of smaller amplitude or zero amplitude and the spacer devices (7) carried by the regions of first amplitude (2) are complementary to the spacer devices (8) carried by the regions of smaller amplitude (3) or zero amplitude, each spacer device (7) carried by a region of first amplitude (2) being capable of cooperating with a complementary spacer device (8) carried by a region of smaller amplitude (3) or zero amplitude for fixing a sheet to an identical adjacent sheet.

2. A sheet as claimed in claim 1, characterised in that the corrugations of first amplitude have a curvilinear profile and the corrugations of smaller amplitude have an angular profile.

3. A sheet as claimed in claim 1, characterised in that the corrugations of first amplitude have an angular profile and the amplitude of the corrugations of smaller amplitude is zero.

4. A sheet as claimed in claim 1, 2 or 3, characterised in that it comprises a plurality of regions having corrugations of first amplitude (2) alternating with an equal number of regions having corrugations of smaller amplitude (3).

5. A sheet as claimed in any one of the claims 1 to 4, characterised in that said spacer devices comprise projecting bosses (8) formed on the side of the concavity of said corrugations of smaller amplitude (3) and flat portions (7) formed on the side of the convexity of said corrugations of first amplitude (2).

6. A sheet as claimed in claim 5, characterised in that the crest of said corrugations of smaller amplitude (3) is formed by a planar surface (5) carrying said bosses (8).

7. A sheet as claimed in claim 5 or 6, characterised in that said bosses (8) and said flat portions (7) are an integral part of said sheet (1).

8. A sheet as claimed in any one of the claims 1 to 7, characterised in that it comprises indentations on its two opposite sides.

9. A sheet as claimed in claim 8, characterised in that the reliefs (9a, 9b, 10a, 10b) of said indentations are arranged along parallel rows which are orthogonal to said direction of the crests of the corrugations.

10. A sheet as claimed in claim 9, characterised in that the reliefs have an elongated shape, the reliefs (10a, 10b) of each row of the region having corrugations of smaller amplitude (3) having their largest dimension oriented along the direction of said row, whereas said region having corrugations of first amplitude (2) has alternately rows in which the reliefs (9a, 9b) have their largest dimension oriented along the direction of the row of which they form part and rows in which the reliefs (9a, 9b) have their largest dimension oriented obliquely relative to the direction of the row of which they form part.

11. A sheet as claimed in any one of the claims 1 to 10, characterised in that it comprises a series of apertures of circular, oblong or other shape.

12. A sheet as claimed in any one of the claims 1 to 11, characterised in that said regions having corrugations of smaller amplitude (3) and corrugations of first amplitude (2) have the same lengths measured in a direction parallel to the crests of the corrugations.

13. A furnishing device for an installation for putting a liquid in contact with a gas, characterised in that it is constituted by a series of sheets (1) according to any one of the claims 1 to 12, which are juxtaposed and fixed to each other, the corrugations of first amplitude and smaller amplitude of each sheet having the same pitch and being in phase.

14. A device as claimed in claim 13 and constituted by a series of sheets (1) according to claim 5, characterised in that the flat portions (7) and the bosses (8) of one sheet (1) are fixed to the bosses (8) and flat portions (7) respectively of the or each adjacent sheet (1).

15. A device as claimed in claim 14 and constituted by a series of sheets (1) according to claim 4, characterised in that it is constituted by identical sheets (1) which are symmetrical relative to a median plane which is parallel to the direction of the crests of the corrugations, said sheets (1) being disposed alternately in one direction and in the opposite direction which is obtained by rotating the sheet through 180° about an axis which is contained in said median plane and passes through the middle of the length of the sheet in a direction perpendicular to the latter.

**Ansprüche**

1. Verrieselungswellblech für eine Einbautenanordnung, bestehend aus Verrieselungsblechen für Flüssigkeit, nebeneinander und vertikal onduliert, die zwischeneinander Durchtritte für ein Gas begrenzen, welches Verrieselungsblech aufeinanderfolgend in einer Richtung parallel zu den Erhebungen der Ondulationen, mindestens zwei Zonen umfaßt, nämlich eine Ondulationszone einer ersten Amplitude (2) und eine Ondulationszone geringerer Amplitude (3) oder im Grenzfall der Amplitude null, welche miteinander durch eine Übergangszone (4) verbunden sind, dadurch gekennzeichnet, daß das Blech (1) in Abständen längs der Erhebungen seiner Ondulationen Verankerungseinrichtungen (7, 8) aufweist, getragen von den Zonen der ersten Amplitude und von den Zonen geringerer Amplitude oder Amplitude null und daß diese Verankerungseinrichtungen (7), getragen von den Zonen der ersten Amplitude (2) komplementär ausgebildet sind zu den Verankerungseinrichtungen (8), getragen von den Zonen geringerer Amplitude (3) oder Amplitude null, wobei jede Verankerungseinrichtung (7), getragen von einer Zone der ersten Amplitude (2) ausgebildet ist zum Zusammenwirken mit einer Komplementären Verankerungseinrichtung (8), getragen von einer Zone geringerer Amplitude (3) oder Amplitude null, für die Befestigung eines Bleches an einem anstoßenden identischen Blech.

2. Verrieselungswellblech nach Anspruch 1, dadurch gekennzeichnet, daß die Ondulationen der ersten Amplitude ein krummliniges Profil aufweisen und die Ondulationen geringerer Amplitude ein winkeliges Profil.

3. Verrieselungswellblech nach Anspruch 1, dadurch gekennzeichnet, daß die Ondulationen der ersten Amplitude ein winkeliges Profil besitzen und die Amplitude der ondulationen geringerer Amplitude 0 ist.

· 4. Verrieselungswellblech nach einem der Ansprüche 1 bis 3, dadurch gekennzeichnet, daß es mehrere Zonen mit Ondulationen der ersten Amplitude (2) aufweist, alternierend mit einer gleichen Anzahl von Zonen mit Ondulationen geringerer Amplitude (3).

5. Verrieselungswellblech nach einem der Ansprüche 1 bis 4, dadurch gekennzeichnet, daß die Verankerungseinrichtungen Vorsprünge (8) umfassen, die auf der konkaven Seite der Ondulationen geringerer Amplitude (3) ausgebildet sind und Abflachungen (7) auf der konvexen Seite der Ondulationen der ersten Amplitude (2).

6. Verrieselungswellblech nach Anspruch 5, dadurch gekennzeichnet, daß die Erhebungen der Ondulationen der geringeren Amplitude (3) von einer ebenen Fläche (5) gebildet werden, welche die Vorsprünge (8) trägt.

7. Verrieselungswellblech nach einem der Ansprüche 5 und 6, dadurch gekennzeichnet, daß die Vorsprünge (8) und die Abflachungen (7) aus dem Material des Bleches (1) selbst bestehen.

8. Verrieselungswellblech nach einem der Ansprüche 1 bis 7, dadurch gekennzeichnet, daß es Waffelungen auf seinen beiden einander abgewandten Seiten aufweist.

9. Verrieselungswellblech nach Anspruch 8, dadurch gekennzeichnet, daß die Reliefs (9a, 9b, 10a, 10b) der Waffelungen in parallelen Reihen ausgebildet sind, welche senkrecht zur Richtung der Erhebungen der Ondulationen verlaufen.

10. Verrieselungswellblech nach Anspruch 9, dadurch gekennzeichnet, daß die Reliefs eine langgestreckte Form aufweisen, wobei die Reliefs (10a, 10b) jede Reihe der Zone mit Ondulationen geringerer Amplitude (3) mit ihrer größten Abmessung in der Richtung der Reihe orientiert sind, während die Zone mit Ondulationen der ersten Amplitude (2) alternierend Reihen aufweisen, in denen die Reliefs (9a, 9b) mit ihrer größten Abmessung in der Richtung der Reihe, zu der sie gehören, orientiert sind und Reihen, in denen die Reliefs (9a, 9b) mit ihrer größten Abmessung schräg orientiert sind relativ zur Richtung der Reihe, zu der sie gehören.

11. Verrieselungswellblech nach einem der Ansprüche 1 bis 10, dadurch gekennzeichnet, daß es ein Netz von runden, langgestreckten oder anders geformten Löchern aufweist.

12. Verrieselungswellblech nach einem der Ansprüche 1 bis 11, dadurch gekennzeichnet, daß die Ondulationszonen geringerer Amplitude (3) und Ondulationszonen der ersten Amplitude (2) die gleiche Länge aufweisen, betrachtet in einer Richtung parallel zu den Erhebungen der Ondulationen.

13. Einbautenanordnung für Anlagen zum Inkontaktbringen einer Flüssigkeit mit einem Gas, dadurch gekennzeichnet, daß sie aus einer Serie von Blechen (1) nach einem der Ansprüche 1 bis 12 besteht, die nebeneinander angeordnet und aneinander befestigt sind, wobei die Ondulationen der ersten Amplitude und der geringeren Amplitude jedes Blattes die gleiche Teilung aufweisen und gleichphasig sind.

14. Einbautenanordnung für Anlagen zum Inkontaktbringen einer Flüssigkeit mit einem Gas, bestehend aus einer Serie von Blechen (1) nach Anspruch 5, dadurch gekennzeichnet, daß die Abflachungen (7) und die Vorsprünge (8) eines Bleches (1) an den Vorsprüngen (8) bzw. Abflachungen (7) des benachbarten Bleches (1) oder der benachbarten Bleche (1) befestigt sind.

15. Einbautenanordnung für Anlagend zum Inkontaktbringen einer Flüssigkeit mit einem Gas, bestehend aus einer Serie von Blechen (1) nach Anspruch 4, dadurch gekennzeichnet, daß sie aus identischen Blechen (1) besteht, die symmetrisch sind bezüglich einer Mittelebene, welche parallel zur Richtung der Erhebungen der Ondulationen verläuft, wobei die Bleche (1) alternierend in der einen Richtung und in der umgekehrten Richtung angeordnet sind, erhalten durch Drehung des Bleches um 180° um eine in der Mittelebene liegende Achse, die durch die Mitte der Länge des Bleches und senkrecht zu diesem verläuft.

<u>FIG .1</u>

<u>FIG .2</u>

<u>FIG .3</u>

0 028 545

## FIG.4

## FIG.5

## FIG.6

2

## FIG.7

## FIG.8

## FIG.9